# EUROPEAN PATENT APPLICATION

(11) **EP 0 634 635 A1**
(43) Date of publication of application: **18.01.1995**
(21) Application number: 93650022.2
(22) Date of filing: 19.07.1993
(51) Int. Cl.: G01F 19/00

(54) **A measure**

(30) Priority: 14.07.1993 IE 930518
(71) Applicant: R & A BAILEY COMPANY LIMITED, Dublin 12 (IE)
(72) Inventor: Keenan, Carl, Dublin 24 (IE); Wrigley, Andrew Nicholson, Auckland (NZ)
(74) Representative: O'Brien, John Augustine

(57) **Abstract**

A measure 1 comprises two separately formed cups 2, 3 which are assembled by slidably engaging a lug 5 on one cup 3 with a groove 6 on the other cup 2. A latch 10 engages under a shoulder 11 to lock the cups 2, 3 together. A cup 20 is snapped over the lug 5 and groove 6 to provide a secondary lock and a drip block to prevent any residual liqueur remaining in one cup being poured into a glass while another liqueur is being poured from the other cup.

## Description

The invention relates to a measure and in particular to a measure for use in pouring measured quantities of liquid beverage products.

A liquid beverage product has recently been developed which is provided in a single container having two sub-containers, one for each liqueur. One of the liqueurs is white coloured cream liqueur and the other is a dark coloured coffee liqueur. It is intended that a user pours the dark liqueur from one of the sub-containers into a glass and the white liqueur is then poured down the side wall of the glass to lie on top of the dark liqueur to present an aesthetically pleasing and pleasant tasting liqueur drink. Conveniently the containers are closed by separate stoppers which are removed as required for pouring a desired liqueur from its container.

This invention is particularly directed towards providing a measure for use with such twin beverage products.

According to the invention, there is provided a measure for liquid beverage products comprising a first cup for receiving a predetermined amount of a liquid beverage and a second cup connected to the first cup for receiving a predetermined amount of another liquid beverage.

In a particularly preferred embodiment of the invention, the cups are separately formed and have respective interengaging portions.

The interengaging portions may, for example, comprise a lug on one cup which slidably engages a groove on the other cup.

In one embodiment of the invention, locking means is provided for retaining the lug in position in the groove. The locking means may comprise a latch means on one of the lug or groove for engaging with a shoulder on the other of the lug or groove.

In another embodiment of the invention, secondary locking means are provided for retaining the cups in an assembled position. The secondary locking means may, for example, comprise a cap overlying the groove and lug, when assembled.

In one embodiment of the invention, each cup includes a rim engaging recess for pouring of liquid from the cup.

Drip block means are preferably also included to substantially prevent any residual liquid in one cup being poured while a desired liquid is being poured from the other cup.

The drip block means may comprise a raised drip block portion in each cup to substantially prevent any residual liquid in one cup being poured while a desired liquid is being poured from the other cup. Preferably each raised portion includes an undercut to substantially prevent residual liquid from being poured from one cup while a desired liquid is being poured from the other cup. The drip block is preferably provided by a drip block cap which overlies a joint between the cups, when assembled and includes depending leg portions defining the raised drip block portions.

In a particularly preferred embodiment of the invention, the cups are visibly distinct, for example, they may be of different colours. One cup may be the colour of one beverage liqueur product and the other cup may be the colour of another beverage liqueur product to be measured.

The capacity of one cup may be one third of a unit and the capacity of the other cup may be the balancing two thirds.

The invention will be more clearly understood from the following description thereof given by way of example only with reference to the accompanying drawings in which:

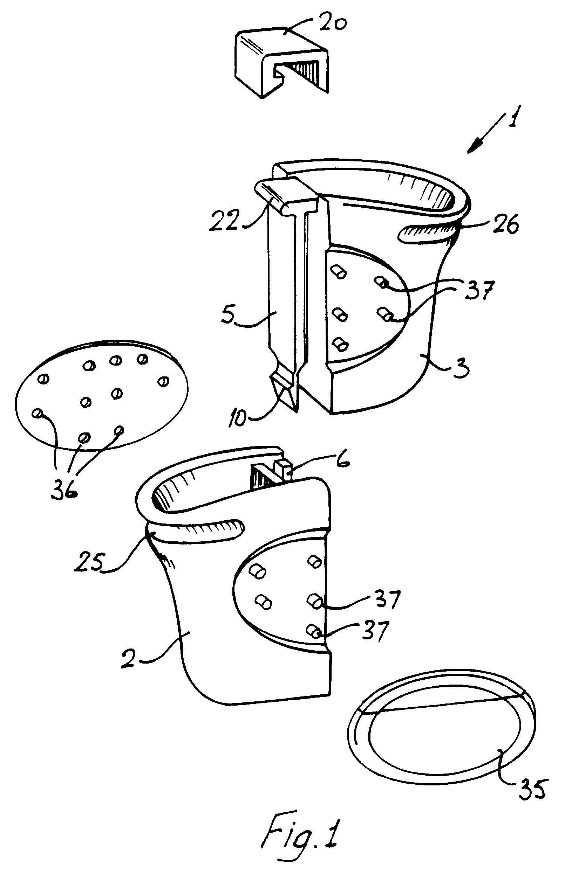

Fig. 1 is an exploded perspective view of a measure according to the invention;
Fig. 2 is a perspective view of the measure assembled;
Fig. 3 is a diagrammatic perspective view of the measure in use;

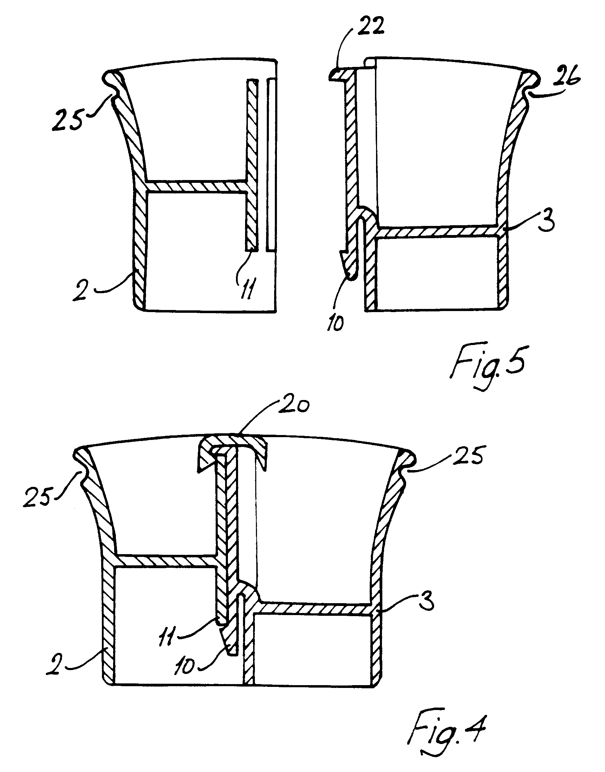

Fig. 4 is a cross-sectional view of the measure assembled, and
Fig. 5 is a cross-sectional view of the measure prior to assembly.

Referring to the drawings, there is illustrated a measure for liquid beverage products according to the invention indicated generally by the reference numeral 1. The measure 1 comprises a first cup 2 and a second cup 3 which are separately formed preferably from plastics material and have respective interengaging portions for use in assembling the cups as illustrated.

In this case the interengaging portions comprise a lug 5 on one cup 3 for slidably engaging with a corresponding groove 6 on the other cup 2. The lug 5 includes a depending latch portion 10 which engages under a shoulder 11, as illustrated particularly in Fig. 5, for locking the two cups together. A secondary locking means is provided by a cap 20 which is snapped over the lug and groove assembly at the upper end thereof. The cap 20 includes an inwardly projecting portion 22 which engages underneath a lip portion 21 at the upper end of the lug 5.

The cap 20 also performs the important function of acting as a drip block for any residual liquid remaining in one cup being poured into a glass while another liquid is being poured from the other cup. The cap includes depending legs 23, 24 with undercuts 23a, 24a respectively to block any residual liquid remaining in a cup while a different liquid is being poured from the other cup.

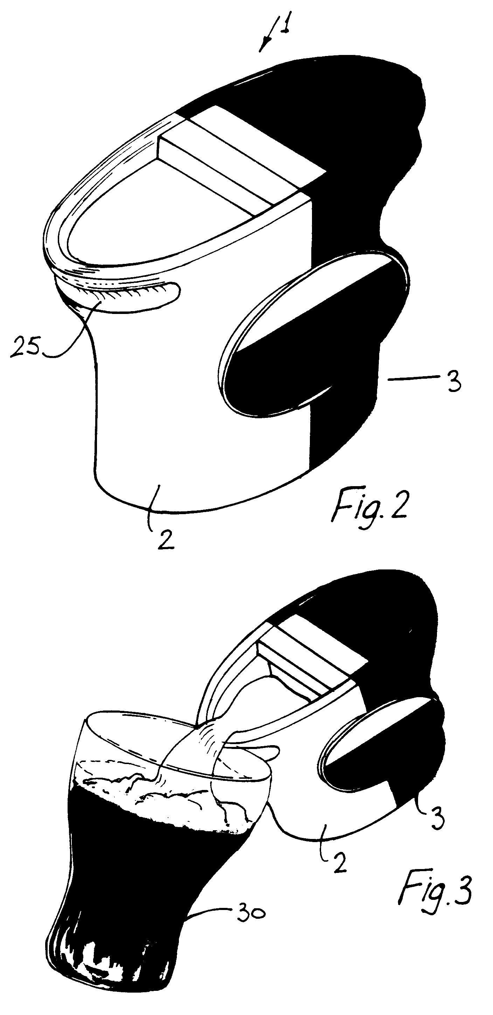

Each of the cups 2, 3 include a rim engaging recess 25, 26 respectively formed at the upper outer edge of the cups 2, 3. The recess 25, 26 engages the rim of a glass 30 on pouring the liquid from the respective cup as illustrated in Fig. 3.

Labels may be provided on label carrying elements 35 which include recesses 36 on the rear thereof for engaging with corresponding lugs 37 on the body of the cups 2, 3. Additional adhesive or heat staking may be used to retain the label elements in position.

In this case the measure 1 is for use in measuring predetermined quantities of different liqueur products. The first and second cups 2, 3 are of different capacities, the first cup 2 in this case having a capacity of one third of a unit and the second cup 3 having in this case a capacity of two thirds of a unit. The cups 2, 3 are visually distinct, for example, by being coloured white and black respectively to ensure that the correct liqueur is poured into the correct measure cup.

In use, on assembly of the measure, a dark liqueur is poured from one compartment of a bottle into the second cup 3 up to a predetermined fill line or bust below the upper rim of the cup. The recess 26 is then engaged against the rim of a glass and the liquid is poured into the glass. A white cream liqueur is then poured into the other cup 2 to a marked fill level and the white liqueur is poured down the side of the glass 30 using the recess 25 so that the lighter cream liqueur product rests on top of the dark cream liqueur product giving an aesthetically and organoleptically pleasing dispensed liqueur product.

The measure is particularly useful in ensuring that the correct proportions of the different liqueurs are correctly dispensed.

It will be appreciated, that while the invention has been described with reference particularly to the measuring of cream and coffee liqueur dual products, it will be appreciated that it may be applied to any other suitable liquids.

Many variations on the specific embodiment of the invention will be readily apparent and accordingly the invention is not limited to the embodiments hereinbefore described which may be varied in both construction and detail.

## Claims

1. A measure (1) for liquid beverage products comprising a first cup (2) for receiving a predetermined amount of a liquid beverage and a second cup (3) connected to the first cup for receiving a predetermined amount of another liquid beverage.

2. A measure as claimed in claim 1 wherein the cups (2,3) are separately formed and have respective interengaging portions (5,6).

3. A measure as claimed in claim 2 wherein the interengaging portions (5,6) comprise a lug (5) on one cup (2) which slidably engages a groove (6) on the other cup (3).

4. A measure as claimed in claim 3 wherein locking means (10,11) are provided for retaining the lug (5) in position in the groove (6), preferably the locking means (10,11) comprises a latch means (10) on one of the lug or groove for engaging with a shoulder (11) on the other of the lug or groove.

5. A measure as claimed in any preceding claim wherein secondary locking means (20) are provided for retaining the cups in an assembled position, preferably the secondary locking means (20) comprises a cap (20) overlying the groove (6) and lug (5), when assembled.

6. A measure as claimed in any preceding claim wherein each cup (2,3) includes a rim engaging recess (25) for pouring of liquid from the cup (2,3).

7. A measure as claimed in any preceding claim including a drip block (20) to substantially prevent any residual liquid in one cup (2) being poured while a desired liquid is being poured from the other cup (3).

8. A measure as claimed in claim 7 wherein the drip block (20) comprises a raised drip block portion (23,24) in each cup (2,3) to substantially prevent any residual liquid in one cup (2) being poured while a desired liquid is being poured from the other cup (3), preferably each raised portion (23,24) includes an undercut (23a,24a) to substantially prevent residual liquid from being poured from one cup (2) while a desired liquid is being poured from the other cup (3), preferably the drip block (20) is provided by a drip block cap (20) which overlies a joint between the cups (2,3), then assembled and includes depending leg portions (23,24) defining the raised drip block portions (23,24).

9. A measure as claimed in any preceding claim wherein the cups (2,3) are visibly distinct, preferably the cups (2,3) are different colours, preferably one cup (2) is the same colour as one beverage liqueur product and the other cup (3) is the same colour as another beverage liqueur product to me measured.

10. A measure as claimed in any preceding claim wherein the capacity of one cup (2) is one third of a unit and the capacity of the other cup (3) is the balancing two thirds.
